# EUROPÄISCHE PATENTANMELDUNG

(11) **EP 2 952 470 A1**
(43) Veröffentlichungstag der Anmeldung: **09.12.2015**
(21) Anmeldenummer: 14171621.7
(22) Anmeldetag: 06.06.2014
(51) Int. Cl.: B67C 11/02, G01F 11/26, G01F 19/00

(54) **Trichter mit Messbecher**

(71) Anmelder: Rotho Kunststoff AG, 5303 Würenlingen (CH)
(72) Erfinder: Brunner, Markus, 5613 Hilfikon (CH)
(74) Vertreter: Lemcke, Brommer & Partner Patentanwälte Partnerschaft mbB

(57) **Zusammenfassung**

Es wird ein Trichter mit einem Auslaufbereich (2) und einem Einfüllbereich (1) vorgeschlagen, der mit einem Messbecher (5) kombiniert wird, welcher im Einfüllbereich (1) des Trichters angeordnet oder in diesen einsetzbar ist. Vorzugsweise ist der Messbecher (5) beweglich, insbesondere verschwenkbar im Einfüllbereich (1) des Trichters gelagert.

## Beschreibung

Die Erfindung betrifft einen Trichter mit einem Auslaufbereich und einem Einfüllbereich, wobei der Einfüllbereich von einem umlaufenden Trichterrand begrenzt ist und sich der Trichter vom Einfüllbereich zum Auslaufbereich verjüngt. Insbesondere betrifft die Erfindung einen solchen Trichter aus Kunststoff für Haushalt und Küche.

Trichter der vorliegenden Art können in unterschiedlichsten Formen ausgestaltet sein, beispielsweise in Form eines Kegels, oder, wie bei Haushaltstrichtern üblich in Form zweiter zusammengesetzter Kegelstümpfe, wobei der Auslaufbereich eine schmale Kegelform zur Bildung eines Schafts und der Einfüllbereich eine breite Kegelform zur Bildung einer möglichst großen Öffnung besitzt. Letzteres ist auch die bevorzugte Form des Trichters, von dem die vorliegende Erfindung ausgeht. Gleichwohl sind auch andere Formen für den Trichter denkbar, insbesondere Formen, deren Querschnitt nicht kreisrund ist.

Trichter der vorliegenden Art werden in der Regel zum Einfüllen von Flüssigkeiten in Gefäße und sonstige Behälter mit kleinen Öffnungen oder Einfüllstutzen verwendet. Daneben können sie auch für sonstige Schüttgüter, wie beispielsweise kleinteilige bzw. körnige Lebensmittel eingesetzt werden.

Im bevorzugten Einsatzgebiet von Trichtern der vorliegenden Art, also in Haushalt und Küche, müssen oft Flüssigkeiten in einer bestimmten Menge in Gefäße eingefüllt werden, beispielsweise beim Backen, beim Mischen von Getränken, beim Verdünnen von Sirup, beim Nachfüllen von Flüssigseife in einen Seifenspender, beim Dosieren von Dünger in Gießwasser, beim Nachfüllen von Motoröl, beim Mischen von Öl und Benzin für den Rasenmäher und dergleichen mehr. Hierfür wird dann in der Regel ein Messbecher verwendet, in dem die gewünschte Flüssigkeitsmenge abgemessen wird, und aus diesem wird diese Flüssigkeitsmenge dann in den Trichter geschüttet.

Mitunter gibt es hierbei Schwierigkeiten aufgrund beengter Platzverhältnisse. Hier behilft man sich oft mit einem Dosiergefäß, das beispielsweise einen schlauchartigen Ausguss aufweist und so die gewünschte Flüssigkeitsmenge direkt (ohne Trichter) einfüllen kann. Dabei besteht das Problem, dass die Flüssigkeitsmenge im Dosiergefäß normalerweise nicht so genau abgelesen werden kann, wie in einem Messbecher. Aber auch dann, wenn keine beengten Platzverhältnisse gegeben sind, ist es mitunter umständlich, zwei unterschiedliche Gerätschaften, nämlich einen Trichter und einen Messbecher bereitzustellen, zumal diese Gerätschaften in der Regel nicht zusammen aufbewahrt werden.

Der vorliegenden Erfindung liegt daher die Aufgabe zugrunde, einen Trichter der eingangs genannten Art hinsichtlich seiner Einsetzbarkeit beim Einfüllen von bestimmten Mengen an Flüssigkeiten oder Schüttgut zu verbessern.

Gelöst ist diese Aufgabe durch einen Trichter mit den Merkmalen des Patentanspruchs 1. Bevorzugte Ausgestaltungen und Weiterbildungen der vorliegenden Erfindung sind in den Patentansprüchen 2 bis 15 niedergelegt.

Gemäß der vorliegenden Erfindung ist bei einem Trichter mit einem Auslaufbereich und einem Einfüllbereich also ein Messbecher vorgesehen, der im Einfüllbereich des Trichters angeordnet ist. Dieser Messbecher kann ein separates Teil sein, der in den Einfüllbereich des Trichters eingesetzt werden kann, er kann jedoch auch fest mit dem Einfüllbereich des Trichters verbunden sein.

Die erfindungsgemäße Kombination eines Trichters mit einem Messbecher stellt zunächst sicher, dass Messbecher und Trichter zusammen aufbewahrt werden und folgerichtig mit einem Griff bereitgestellt werden können. Ferner ist der Messbecher erfindungsgemäß, auch wenn er als separates Teil aus dem Einfüllbereich des Trichters entnehmbar und wieder in diesen einsetzbar ist, jedenfalls dann, wenn er im Einfüllbereich des Trichters eingesetzt ist, ein integraler Teil des Trichters, so dass der Trichter schon mit der fertig abgemessenen Menge von Schüttgut oder Flüssigkeit an einen etwa schwer zugänglichen Einfüllstutzen angesetzt werden kann. Es muss also in diesem schwer zugänglichen Bereich nicht noch Raum für einen Messbecher oberhalb des Trichters gegeben sein, um die Flüssigkeit aus dem Messbecher in den Trichter hineinschütten zu können. Vielmehr kann der Messbecher innerhalb des Einfüllbereichs des Trichters ausgeleert oder geöffnet werden, was die Handhabung gerade bei beengten Platzverhältnissen erleichtert.

Bevorzugt ist der Messbecher im Einfüllbereich des Trichters beweglich angeordnet, und zwar insbesondere durch eine bewegliche Lagerung im Einfüllbereich oder am Trichterrand. Diese bewegliche Anordnung ermöglicht, dass die im Messbecher enthaltene Flüssigkeit oder das Schüttgut innerhalb des Einfülltrichters in diesen hineingeschüttet werden kann. Gegenüber einem Einfülltrichter, der etwa an seinem unteren Ende öffen- und schließbar ist, ist diese Maßnahme einfacher, langzeitstabiler und weniger störanfällig.

Zur beweglichen Lagerung des Messbechers im Trichter können am Trichterrand oder im Einfüllbereich des Trichters zwei in etwa diametral gegenüberliegende Schwenklagerelemente angeordnet sein, insbesondere Lagerzapfen oder Lagerbuchsen, während der Messbecher passende Gegenlagerelemente, dementsprechend insbesondere Lagerbuchsen oder Lagerzapfen aufweist. Mit Hilfe der Schwenklagerelemente und der Gegenlagerelemente ist der Messbecher dann schwenkbar im Einfüllbereich des Trichters gelagert, und zwar mit einer Schwenkachse, die durch oder über den Einfüllbereich verläuft. Bei einem kegelförmigen Trichter, dessen Einfüllbereich einen kreisrunden Querschnitt aufweist, verläuft die Schwenkachse vorzugsweise in etwa mittig über den oder innerhalb des Einfüllbereichs, so dass der Messbecher um diese Schwenkachse herum verschwenkt werden kann, um dessen Inhalt in den Einfüllbereich des Trichters abzugeben.

Die Verschwenkbarkeit des Messbechers im Einfüllbereich des Trichters ist auch dann vorteilhaft, wenn der Trichter geneigt auf einen Einfüllstutzen gesetzt bzw. in diesen eingesetzt werden muss; denn der Messbecher kann dann um die Schwenkachse so verschwenkt werden, dass er trotz der Neigung des Trichters nicht gekippt wird, solange sein Inhalt noch nicht in den Einfüllbereich des Trichters abgegeben werden soll.

Insbesondere dann, wenn der erfindungsgemäße Trichter mitsamt seinem Messbecher aus Kunststoff gefertigt ist, ist es vorteilhaft, wenn der Messbecher im Bereich seiner Gegenlagerelemente mit nach oben überstehenden Laschen versehen ist, um den Messbecher zum Einsetzen in die Schwenklagerelemente des Trichters oder zum Herausnehmen aus den Schwenklagerelementen verformen zu können. An den beiden überstehenden Laschen kann der Messbecher leicht zusammengedrückt und so verformt werden, so dass sich die Gegenlagerelemente aus den Schwenklagerelementen lösen, insbesondere wenn diese als Lagerzapfen und Lagerbuchsen ausgebildet sind. So kann der Messbecher leicht aus dem Einfüllbereich des Trichters herausgenommen und ebenso leicht wieder in diesen eingesetzt werden, wobei er dennoch zwar lösbar, aber dauerhaft mit dem Trichter verbunden ist und integraler Teil desselben wird.

Die Schwenklagerelemente können dann, wenn sie am Trichterrand angeordnet sind, auch aus nach oben offenen Lagerschalen bestehen, während die Gegenlagerelemente am Messbecher als Lagerstifte ausgebildet sind, die in diese Lagerschalen eingesetzt und aus ihnen herausgenommen werden können. Ein Verformen des Messbechers zum Einsetzen bzw. Herausnehmen ist dann nicht notwendig. Vorzugsweise sind die nach oben offenen Lagerschalen an ihrer offenen Seite solcherart mit einer Verengung versehen, dass die Lagerstifte des Messbechers in die Lagerschalen eingerastet werden können.

Im Rahmen der vorliegenden Erfindung ist es bevorzugt, dass der Messbecher mit einer Skala versehen ist, die ein Ablesen eines im Messbecher befindlichen Volumens an Flüssigkeit oder Schüttgut bei unterschiedlichen Neigungen des Messbechers gestattet. Solche Skalen, die in der Regel aus einer Reihe von langgezogenen Strichen bestehen, welche zu einem Schüttrand hin eine Kurve beschreiben, sind bei Messbechern an sich bekannt. Diese bekannten Skalen ermöglichen das Ablesen des Füllstands einer Flüssigkeit in einem Messbecher auch während des Ausschüttens der Flüssigkeit. Bei der vorliegenden Erfindung soll die entsprechende Skala auch eine etwa vorhandene Neigung des Trichters beim Abmessen einer Flüssigkeit oder eines Schüttguts im Messbecher kompensieren.

Bevorzugterweise sind der Einfüllbereich des erfindungsgemäßen Trichters wie auch der Messbecher jeweils in etwa halbkugelförmig ausgebildet. In Verbindung mit einer schwenkbaren Lagerung des Messbechers um eine Schwenkachse, die diametral über dem Trichterrand verläuft, ermöglicht eine solche Ausformung des erfindungsgemäßen Trichters, dass der Messbecher ein im Verhältnis zu den Außenabmessungen des Trichters optimales Volumen zum Abmessen von Flüssigkeiten oder Schüttgut aufweist. Des Weiteren besteht die vorteilhafte Möglichkeit, den Rand des Messbechers zumindest bereichsweise zu strukturieren, beispielsweise mit einer siebartigen Struktur, um etwaige, in einer aus dem Messbecher auszuschüttenden Flüssigkeit enthaltene, grobe Partikel zurückzuhalten. Denn durch die kugelschalenartig ineinander liegenden und gegeneinander beweglichen, bevorzugten Halbkugelformen einerseits des Messbechers und andererseits des Einfüllbereichs des Trichters verläuft der Rand des Messbechers unabhängig von seinem Schwenkwinkel innerhalb des Einfüllbereichs des Trichters immer in etwa in einem konstanten Abstand zur Innenfläche des Einfüllbereichs, so dass der strukturierte Rand des Messbechers die ihm zugedachte Rückhaltewirkung für Partikel bis zum vollständigen Ausschütten des Messbechers verwirklichen kann.

Insbesondere dann, wenn der Messbecher und der Einfüllbereich des Trichters in etwa halbkugelförmig ausgebildet sind, ist der Auslaufbereich des Trichters vorzugsweise in Form eines vom Einfüllbereich abgesetzten Schafts ausgebildet, wobei sich der Einfüllbereich vom Schaft ausgehend konisch bis zum Trichterrand erweitert.

Um den Messbecher dann, wenn er aus dem Einfüllbereich des Trichters herausnehmbar ausgebildet ist, als separates Teil besser handhaben zu können, ist es bevorzugt, wenn er einen abgeflachten Boden zum Abstellen auf einer ebenen Fläche aufweist.

Insbesondere wenn der Messbecher schwenkbar in oder am Einfüllbereich des Trichters gelagert ist, ist es vorteilhaft, wenn am Messbecher ein Griffelement angeordnet ist, das über den Trichterrand übersteht, wenn der Messbecher in den Einfüllbereich des Trichters eingesetzt ist. Mit Hilfe dieses Griffelements kann der Messbecher dann zum Ausschütten seines Inhalts leicht verschwenkt werden. Vorzugsweise ist hierbei im Trichterrand ein Rastelement zur einrastenden Aufnahme des Griffelements des Messbechers vorgesehen, so dass dieser im Normalzustand fest in den Einfüllbereich des Trichters integriert ist.

Schließlich kann im Rahmen der vorliegenden Erfindung noch vorgesehen sein, dass ein zusätzlicher Einsetztrichter vorhanden ist, der zwischen den Einfüllbereich des Trichters und den Messbecher eingesetzt wird. Es ergibt sich so ein dreiteiliges Gerät, das gemeinsam aufbewahrt und mit einem Griff bereitgestellt werden kann. Durch Herausnehmen des Messbechers aus dem Einfüllbereich des Trichters wird der Einsetztrichter freigegeben und kann ebenfalls herausgenommen werden.

Im Folgenden werden anhand der beigefügten Zeichnungen zwei Ausführungsbeispiele für einen erfindungsgemäß ausgestalteten Trichter näher beschrieben und erläutert. Es zeigen:
- Figur 1: eine perspektivische Darstellung eines ersten Ausführungsbeispiels für einen erfindungsgemäßen Trichter mit Messbecher;
- Figur 2: das Ausführungsbeispiel aus Figur 1 mit verschwenktem Messbecher;
- Figur 3: das Ausführungsbeispiel aus Figur 2 mit im Messbecher enthaltener Flüssigkeit;
- Figur 4: das Ausführungsbeispiel aus Figur 1 mit vom Trichter getrenntem Messbecher;
- Figur 5: eine schematische perspektivische Ansicht eines zweiten Ausführungsbeispiels.
- Figur 6: eine perspektivische Darstellung eines dritten Ausführungsbeispiels;
- Figur 7: eine andere Perspektive des Ausführungsbeispiels aus Figur 6.

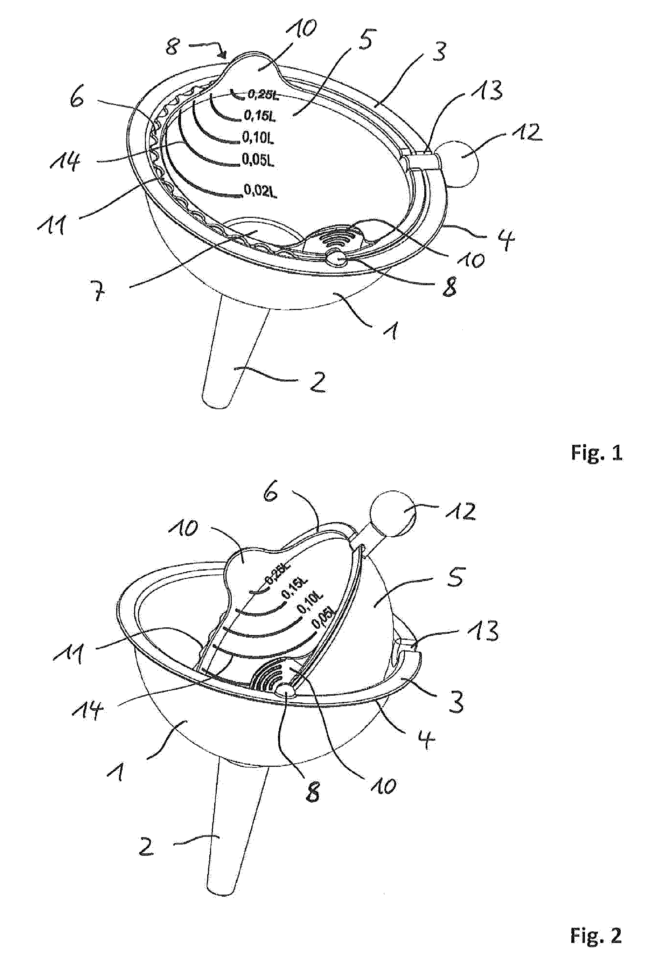

In den Figuren 1 bis 7 sind gleiche Teile mit identischen Bezugszeichen versehen. Beide in den Figuren dargestellten Ausführungsbeispiele umfassen den eigentlichen Trichterteil des erfindungsgemäßen Trichters mit einem Einfüllbereich 1 und einem Auslaufbereich 2. Der Auslaufbereich 2 ist als Kegelstumpf ausgeformt und bildet einen Schaft, der vom Einfüllbereich 1 abgesetzt ist und in einen Einfüllstutzen oder ein Gefäß eingesteckt werden kann. Der Einfüllbereich 1 besitzt die Form einer Kugelschale und ist halbkugelförmig ausgebildet. Er erweitert sich vom Auslaufbereich 2 ausgehend konisch bis zu einem Trichterrand 3. Dieser Trichterrand 3 ist vorliegend mit einer Auskragung 4 versehen.

Gemäß der vorliegenden Erfindung, ist in den in den Figuren 1 bis 5 dargestellten Ausführungsbeispielen ein Messbecher 5 in den Einfüllbereich 1 des Trichters eingesetzt. Dieser Messbecher 5 besitzt, wie insbesondere Figur 2 verdeutlicht, ebenfalls die Form einer Kugelschale und ist, wie auch der Einfüllbereich 1 des Trichters, halbkugelförmig mit einem ebenfalls auskragenden Rand 6 ausgeformt. Der Messbecher 5 und der Einfüllbereich 1 des Trichters sind solcherart kugelschalenförmig ausgebildet, dass der Messbecher 5 rundum einen geringen Abstand zum Einfüllbereich 1 des Trichters einhält und in diesem aufgenommen ist.

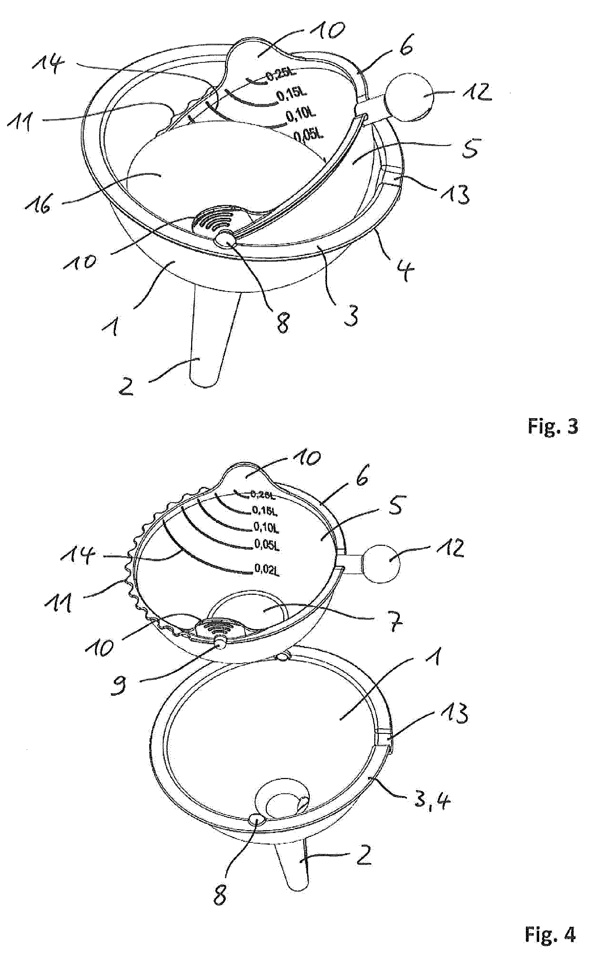

Wie insbesondere anhand Figur 4 erkennbar ist, weist der Messbecher 5 einen abgeflachten Boden 7 zum Abstellen auf einer ebenen Fläche auf. Folgerichtig ist der Messbecher 5 aus dem Einfüllbereich 1 des Trichters entnehmbar und wieder in diesen einsetzbar.

Die Verbindung zwischen dem Messbecher 5 und dem Einfüllbereich 1 des Trichters erfolgt über zwei diametral gegenüberliegend am Trichterrand 3 angeordnete Lagerbuchsen als Schwenklagerelemente 8 sowie zwei in diese Lagerbuchsen eingreifende, in Figur 4 dargestellte Lagerzapfen als Gegenlagerelemente 9 am Rand 6 des Messbechers 5. Mittels zweier Laschen 10 am Rand 6 des Messbechers 5 kann dieser zusammengedrückt und infolgedessen so verformt werden, dass sich die Lagerzapfen bzw. Gegenlagerelemente 9 aus ihrem Eingriff aus den Lagerbuchsen bzw. Schwenklagerelementen 8 im Trichterrand 3 lösen, so dass der Messbecher 5 aus dem Einfüllbereich 1 des Trichters herausgenommen werden kann. Auf die gleiche Weise kann der Messbecher 5 wieder in den Einfüllbereich 1 eingesetzt werden. Sobald die Lagerzapfen und Lagerbuchsen im Eingriff miteinander stehen, ist der Messbecher 5 insoweit fest mit dem Einfüllbereich 1 des Trichters verbunden und bildet eine mit diesem integrale Einheit.

Mittels der Schwenklagerelemente 8 und der Gegenlagerelemente 9 ist der Messbecher 5, wie insbesondere Figur 2 verdeutlicht, um eine diametral über den Einfüllbereich 1 verlaufende Schwenkachse verschwenkbar. Diese Schwenkachse verläuft im vorliegenden Ausführungsbeispiel in etwa durch den Mittelpunkt der beiden Kugeln, die die halbkugelförmigen Kugelschalen des Messbechers 5 und des Einfüllbereichs 1 gedanklich vervollständigen. Insofern führt das Verschwenken des Messbechers 5 um die Schwenkachse nicht dazu, dass sich der Abstand zwischen dem Messbecher und dem Einfüllbereich 1 beim Verschwenken verändert; dieser bleibt vielmehr während der gesamten Schwenkbewegung unverändert.

Dies ermöglicht, dass diejenige Seite des Randes 6 des Messbechers 5, über die - wie Figur 3 verdeutlicht - eine im Messbecher 5 enthaltene Flüssigkeit 16 beim Verschwenken des Messbechers 5 in den Einfüllbereich 1 des Trichters abgegeben wird, durch eine vorliegend gezackte Struktur 11 grob gefiltert werden kann; beispielsweise können hier bei einem frisch gepressten Orangensaft als Flüssigkeit 16 etwa darin enthaltene Fruchtkerne beim Ausschütten der Flüssigkeit 16 in den Einfüllbereich 1 des Trichters zurückgehalten werden. Die parallele Ausformung des Messbechers 5 und des Einfüllbereichs 1 als Kugelschalen gewährleistet die Sieb- bzw. Filterfunktion der Struktur 11 am Rand 6 des Messbechers 5 zu jedem Zeitpunkt beim Verschwenken des Messbechers 5 gegenüber dem Einfüllbereich 1.

Das Verschwenken des Messbechers 5 im Einfüllbereich 1 um die von den Gegenlagerelementen 9 definierte Schwenkachse wird durch ein Griffelement 12 erleichtert, das, wie Figur 1 zeigt, über den Trichterrand 3 übersteht und vom Anwender leicht ergriffen werden kann. Das Griffelement 12 ist fest mit dem Rand 6 des Messbechers 5 verbunden. Der Trichterrand 3 weist eine Einbuchtung als Rastelement 13 auf, in die das Griffelement 12 einrastend hineingedrückt werden kann (Figur 1). Der Messbecher 5 kann sich so nicht unbeabsichtigt innerhalb des Einfüllbereichs 1 des Trichters verschwenken, sondern sitzt fest in diesem.

Wie wiederum Figur 3 am besten verdeutlicht, ist der Messbecher 5 auf seiner Innenseite mit einer Skala 14 versehen, an der das im Messbecher 5 befindliche Volumen an Flüssigkeit 16 abgelesen werden kann. Diese Skala 14 verfügt über Skalenstriche, die zum Rand 6 des Messbechers 5 hin in einer Kurve verlaufen, so dass der Füllstand bzw. das Volumen der Flüssigkeit 16 im Messbecher 5 auch bei verschwenktem Messbecher abgelesen werden kann (Figur 3).

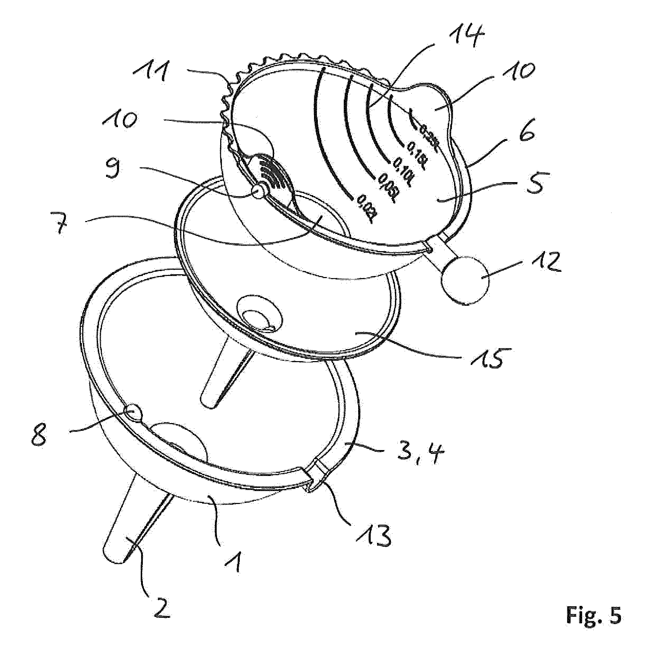

Figur 5 zeigt als zweites Ausführungsbeispiel einen Trichter, der sich vom ersten Ausführungsbeispiel, das in den Figuren 1 bis 4 dargestellt ist, durch das zusätzliche Vorhandensein eines Einsetztrichters 15 unterscheidet. Der Einsetztrichter 15 sitzt zwischen dem Einfüllbereich 1 des Trichters und dem in diesem eingesetzten Messbecher 5 und kann entnommen werden, wenn der Messbecher 5 aus dem Einfüllbereich 1 des Trichters herausgenommen wird. Da der Messbecher 5 im vorliegenden Ausführungsbeispiel normalerweise fest in den Schwenklagerelementen 8 und im Rastelement 13 sitzt, ist der Einsetztrichter 15 unverlierbar integriert und kann jederzeit separiert werden, um ihn für Einfüllstutzen oder Flaschenöffnungen zu verwenden, für die der Auslaufbereich 2 des eigentlichen Trichters zu breit ist.

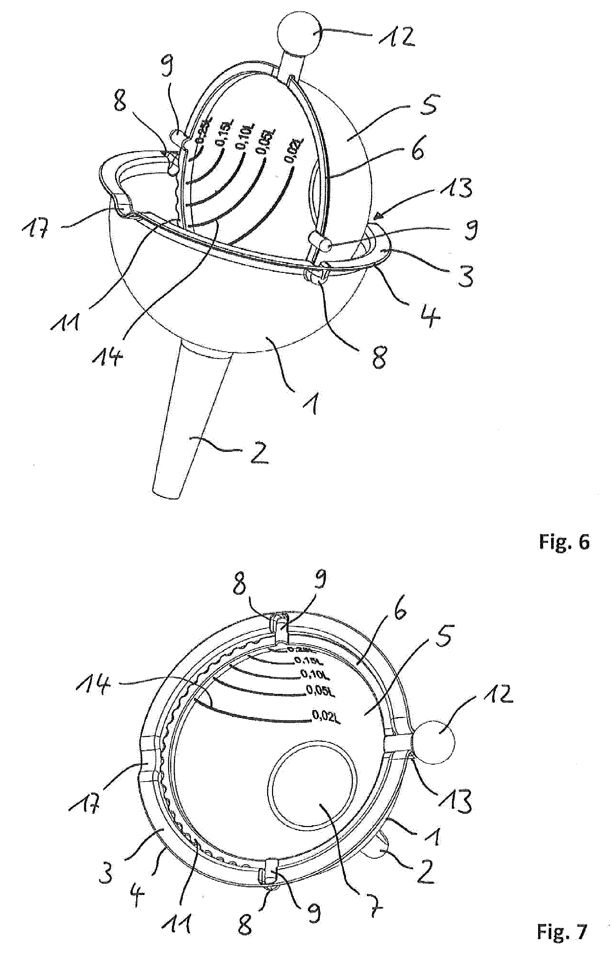

In den Figuren 6 und 7 ist als drittes Ausführungsbeispiel ein Trichter dargestellt, der sich von den Ausführungsbeispielen aus den Figuren 1 bis 5 insbesondere durch die Verbindung zwischen dem Messbecher 5 und dem Einfüllbereich 1 des Trichters unterscheidet. Hier sind die Schwenklagerelemente 8 ebenfalls am Trichterrand 3 angeordnet, jedoch nicht als Lagerbuchsen ausgestaltet, sondern als nach oben offene Lagerschalen. Der Messbecher 5 weist als Gegenlagerelemente 9 zwei passend in die Lagerschalen einsetzbare Lagerstifte auf, so dass der Messbecher 5 leicht in den Einfüllbereich 1 des Trichters eingesetzt (Figur 7) und ebenso leicht herausgenommen werden kann (Figur 6). Hierzu ist es nicht notwendig, den Messbecher 5 zu verformen. Dementsprechend unterscheidet sich dieses dritte Ausführungsbeispiel von den beiden vorhergehenden Ausführungsbeispielen auch durch das Fehlen der Laschen 10 am Rand 6 des Messbechers 5.

Die im vorliegenden dritten Ausführungsbeispiel als Lagerschalen ausgebildeten Schwenklagerelemente 8 am Trichterrand 3 können bedarfsweise so ausgeformt sein, dass die als Lagerstifte ausgebildeten Gegenlagerelemente 9 am Rand 6 des Messbechers 5 einrastend in die Lagerschalen eingesetzt werden können.

Mit allen in den Figuren 1 bis 7 dargestellten Ausführungsbeispielen für einen erfindungsgemäß ausgestalteten Trichter kann eine abzufüllende Flüssigkeit 16 im Messbecher 5 abgemessen und durch eine Schwenkbewegung des Messbechers 5 verlustfrei in den Einfüllbereich 1 des Trichters ausgegossen werden, wonach die Flüssigkeit 16 über den Auslaufbereich 2 des Trichters in einen (nicht dargestellten) Einfüllstutzen eines Gefäßes oder dergleichen fließen kann. Durch Zusammendrücken der beiden über den Trichterrand 3 überstehenden Laschen 10 bzw. durch Herausnehmen der Lagerstifte aus den Lagerschalen kann der Messbecher 5 einfach montiert und demontiert werden, um ihn auch separat verwenden zu können. Hierfür verfügt der Messbecher 5 über einen abgeflachten Boden 7 als Standfläche. Das Griffelement 12, mit dem der Messbecher 5 verschwenkt werden kann, fungiert zusammen mit dem Rastelement 13 im Trichterrand 3 als Verrieglung des Messbechers 5 am Einfüllbereich 1 des Trichters. Optional kann der erfindungsgemäße Trichter mit einem kleineren Einsetztrichter 15 erweitert werden, der in den Auslaufbereich 2 eingesetzt werden kann, und vom in den Einfüllbereich 1 eingesetzten Messbecher 5 ortsfest gehalten wird.

## Patentansprüche

1. Trichter mit einem Auslaufbereich (2) und einem Einfüllbereich (1), wobei der Einfüllbereich (1) von einem umlaufenden Trichterrand (3) begrenzt ist und sich der Trichter vom Einfüllbereich (1) zum Auslaufbereich (2) verjüngt,
**dadurch gekennzeichnet,**
**dass** ein Messbecher (5) vorgesehen ist, der im Einfüllbereich (1) des Trichters angeordnet oder in diesen einsetzbar ist.

2. Trichter nach Anspruch 1,
**dadurch gekennzeichnet,**
**dass** der Messbecher (5) im Einfüllbereich (1) des Trichters beweglich angeordnet, insbesondere im Einfüllbereich (1) oder am Trichterrand (3) beweglich gelagert ist.

3. Trichter nach Anspruch 2,
**dadurch gekennzeichnet,**
**dass** am Trichterrand (3) oder im Einfüllbereich (1) des Trichters zwei in etwa diametral gegenüberliegende Schwenklagerelemente (8) angeordnet sind, um den Messbecher (5) mittels an diesem angeordneten Gegenlagerelementen (9) um eine durch oder über den Einfüllbereich (1) verlaufende Schwenkachse schwenkbar zu lagern.

4. Trichter nach Anspruch 3,
**dadurch gekennzeichnet,**
**dass** der Messbecher (5) durch elastisches Verformen in die Schwenklagerelemente (8) des Trichters einsetzbar und/oder aus diesen herausnehmbar ist.

5. Trichter nach Anspruch 4,
**dadurch gekennzeichnet,**
**dass** der Messbecher (5) im Bereich seiner Gegenlagerelemente (9) mit nach oben überstehenden Laschen (10) versehen ist, um den Messbecher (5) zum Einsetzen in die oder zum Herausnehmen aus den Schwenklagerelementen (8) des Trichters zu verformen.

6. Trichter nach einem der Ansprüche 3 bis 5,
**dadurch gekennzeichnet,**
**dass** die Schwenklagerelemente (8) und Gegenlagerelemente (9) im Wesentlichen aus Lagerzapfen und Lagerbuchsen bestehen.

7. Trichter nach mindestens einem der Ansprüche 3 bis 6,
**dadurch gekennzeichnet,**
**dass** die Schwenklagerelemente (8) am Trichterrand (3) angeordnet sind und im Wesentlichen aus nach oben offenen Lagerschalen bestehen, während die Gegenlagerelemente (9) am Messbecher (5) im Wesentlichen als Lagerstifte ausgebildet sind, die, insbesondere einrastend, in die Lagerschalen einsetzbar und aus diesen herausnehmbar sind.

8. Trichter nach mindestens einem der Ansprüche 1 bis 7,
**dadurch gekennzeichnet,**
**dass** der Messbecher (5) mit einer Skala (14) versehen ist, die ein Ablesen eines im Messbecher (5) befindlichen Volumens an Flüssigkeit (16) oder Schüttgut bei unterschiedlichen Neigungen des Messbechers (5) gestattet.

9. Trichter nach mindestens einem der Ansprüche 1 bis 8,
**dadurch gekennzeichnet,**
**dass** der Messbecher (5) mit einem zumindest bereichsweise strukturierten Rand (6) versehen ist, um etwaige, in einer aus dem Messbecher (5) auszuschüttenden Flüssigkeit (16) enthaltene, grobe Partikel zurückzuhalten.

10. Trichter nach mindestens einem der Ansprüche 1 bis 9,
**dadurch gekennzeichnet,**
**dass** der Auslaufbereich (2) des Trichters in Form eines vom Einfüllbereich (1) abgesetzten Schafts ausgebildet ist und sich der Einfüllbereich (1) vom Schaft ausgehend konisch bis zum Trichterrand (3) erweitert.

11. Trichter nach Anspruch 10,
**dadurch gekennzeichnet,**
**dass** der Einfüllbereich (1) des Trichters und der Messbecher (5) jeweils im Wesentlichen die Form eines Kugelschalenabschnitts aufweisen, insbesondere in etwa halbkugelförmig ausgebildet sind.

12. Trichter nach Anspruch 11,
**dadurch gekennzeichnet,**
**dass** der Messbecher (5) einen abgeflachten Boden (7) zum Abstellen auf einer ebenen Fläche aufweist.

13. Trichter nach mindestens einem der Ansprüche 1 bis 12,
**dadurch gekennzeichnet,**
**dass** am Messbecher (5) ein Griffelement (12) angeordnet ist, das über den Trichterrand (3) übersteht, wenn der Messbecher (5) in den Einfüllbereich (1) des Trichters eingesetzt ist.

14. Trichter nach Anspruch 13,
**dadurch gekennzeichnet,**
**dass** der Trichterrand (3) ein Rastelement (13) zur einrastenden Aufnahme des Griffelements (12) des Messbechers (5) aufweist.

15. Trichter nach mindestens einem der Ansprüche 1 bis 14,
**dadurch gekennzeichnet,**
**dass** ein zusätzlicher Einsetztrichter (15) zum Einsetzen zwischen den Einfüllbereich (1) und den Messbecher (5) vorgesehen ist.
